# EUROPÄISCHE PATENTANMELDUNG

(11) **EP 0 629 436 A1**
(43) Veröffentlichungstag der Anmeldung: **21.12.1994**
(21) Anmeldenummer: 94108912.0
(22) Anmeldetag: 10.06.1994
(51) Int. Cl.: B01J 20/00, B01J 20/28

(54) **Verfahren zur Herstellung von Adsorbentien mit katalytischer Wirkung**

(30) Priorität: 16.06.1993 DE 4319844
(71) Anmelder: Affonso, Alvaro, Prof. Dr., D-61348 Bad Homburg (DE)
(72) Erfinder: Affonso, Alvaro, Prof. Dr., D-61348 Bad Homburg (DE)

(57) **Zusammenfassung**

Die Erfindung betrifft die Herstellung von Adsorbentien mit katalytischer Wirkung. Der Vorteil dieser neuartigen Adsorbentien liegt darin, daß nach Erschöpfung der Kapazität, die adsorbierten Giftstoffe durch den eingebauten Katalysator während der Entsorgungstufe völlig zerstört werden. Der Aufbau einer Sorte ist beschrieben. Diese ist in der Lage, halogenierte Stoffe, wie z. B. Dioxine, zu adsorbieren und während der pyrolitischen Entsorgung, die Stoffe durch den anwesenden Kupferkatalysator völlig zu zerstören.

## Beschreibung

Adsorption ist ein komplexes physikalisches Phänomen. Die im Innern eines festen Stoffs befindlichen Atome oder Moleküle üben nach allen drei Richtungen des Raumes ihre gegenseitigen Anziehungskräfte - die ja den Zusammenhalt des festen Stoffs bedingen - aus. Dagegen werden die Bindungskräfte der in der Oberfläche befindlichen Teilchen nur nach dem Innern des festen Stoffs hin beansprucht, während sie nach außen hin frei wirksam bleiben. So kommt es zu der Phänomen "Adsorption" wobei manche Feststoffe in der Lage sind, Gase oder gelöste Stoffe an ihrer Oberfläche anzureichern. Die Langmuirsche Adsorptionsisotherme legt den Zusammenhang zwischen die je Oberflächeeinheit adsorbierte Grammenge und der Konzentration des zur Adsorption kommenden Stoffs dar. Feinverteilte Adsorbentien sind wirksamer als die grobverteilte Sorte. Obwohl viele Adsorbentien aus natürlicher und synthetischer Basis untersucht wurden, bleiben Kieselgele und Aktivkohle als die einzigen Mittel zur Entfernung von Verunreinigungen in Luft, Wasser und Boden. Für Adsorptionszwecke geeignete Aktivkohle, wird durch verhältnismässig gelindes erhitzen von Naturstoffen wie Holz, Rohrzucker, Knochen hergestellt. Wegen der zunehmenden Verschmutzung der Umwelt, wird der Bedarf an Reinigungsmitteln für Wasser, Luft und Boden bald so groß sein, daß Aktivkohle aus natürlicher Basis, diesen Bedarf nicht mehr erbringen kann. In Patentanmeldung P 39 19 567.8, Offenlegungsschrift DE 39 19 567 A1 und P 40 15 555.2, Offenlegungsschrift DE 40 15 555 A1, wurde ein Verfahren zur Herstellung von künstlicher Aktivkohle durch Einbringen von feinen Erscheinungsformen des Kohlenstoffs, wie z.B. Ruß, Anthrazit oder Braunkohle innerhalb der groben Poren einer inerten Matrix, wie z.B. Ton, beschrieben. Das Material hat dieselbe Adsorption wie Aktivkohle und verwendet eine prozentual niedrige Menge von synthetischen oder anderen fossilen Brennstoffen. Das große Problem in allen Sorten von Adsorbentien, ist aber die Entsorgung von gesättigten Materialien. Die Methoden welche heutezutage verwendet werden, sind Desorption und Wiederverwendung oder pyrolytische Beseitigung, falls die Giftigkeit der adsorbierten Substanz sehr hoch ist. Die pyrolitische Beseitigung oder Verbrennung von solchen Materialien, benötigen ein kostspieliges Verfahren, um ausgewichene und nicht zersetzte Spuren der Gifte in den Abgasen des Verbrennungsofens zu vermeiden. In vorliegender Erfindung wird das Problem folgendermaßen gelöst:
Eine feingepulverte Sorte von Kohle oder Siliciumgelen wurde mit einem metallischen Katalysator vermischt. Die Mischung wurde weiter mit einer gewöhnlichen Töpfertonmasse vermischt und in geeignetes Granulat oder Kügelchen geformt. Nach Trocknung wird das Material in absoluter Abwesenheit von Luft in einem Ofen bei einer Temperatur von 500 bis 1000 Grad Celsius gebrannt. Dieses Material funktioniert wie Aktivkohle und ist in der Lage, unerwünschte Verunreinigungen aus der Luft, Wasser und Boden zu entfernen. Wenn die Adsorptionskapazität des Materials erschöpft ist, wird es in einer Atmosphäre von Butan oder Brenngas bei hoher Temperatur erhitzt. Während dieses Vorgangs entweicht der adsorbierte Stoff aus dem Material und trifft gleichzeitig den heissen Metallkatalysator. Dadurch wird der adsorbierte Stoff völlig zersetzt.

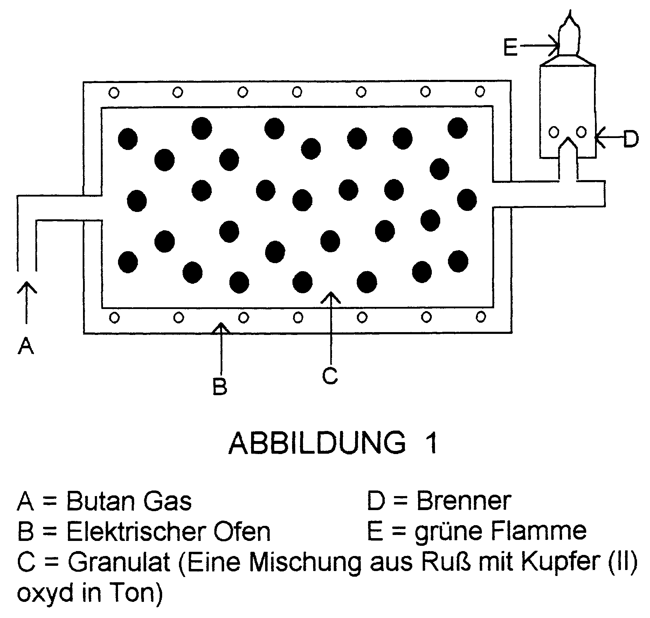

Nachfolgend ein Beispiel eines Laboransatzes zur Herstellung von Adsorbentien mit katalytischer Wirkung zur Beseitigigung von adsorbierten halogenierten organischen Stoffen (z.B. Dioxine). Abbildung 1 zeigt eine Laborvorrichtung, welche geeignet ist, die Adsorbentien zu erhitzen und die adsorbierten halogenierten organischen Stoffe völlig zu zersetzen. Die kleine Flamme des ausströmenden Gas zeigt eine grüne Farbe (Beilstein Nachweis für Halogene mit Kupfer(II)-oxyd) solange der organische Stoff zersetzt wird.

### Laboransatz

50 g Töpfertonmasse (rot oder gelb) wurden mit 5g fein gepulvertem Anthrazit oder Ruß und 4 g Kupfer(II)-oxyd vermischt. Die homogene Masse wurde granuliert und das Granulat getrocknet. Es wurde dann gebrannt in Abwesenheit von Luft, z.B. in einer Atmosphäre von Stickstoff bei 700 Grad Celsius. Das Granulat wurde dann benutzt, um verunreinigtes Wasser (mit 100 mikrogramm Chloroform/l ) zu reinigen. Das gebrauchte Granulat wurde dann in die Vorrichtung (Abbildung 1) gebracht. Es wurde festgestellt, daß das ausströmende Butan keine Spuren von Chloroform enthielt.

Wie in Anspruch genommen, ist es möglich, verschiedene poröse Matrixen , Adsorbentien und Katalysatoren zu verwenden, je nach Art der Verunreinigung.

## Patentansprüche

1. Verfahren zur Herstellung von Adsorbentien mit katalytischer Wirkung dadurch gekennzeichnet, daß eine Mischung aus einem feinporigen Adsorptionsmittel mit einem Katalysator in feiner Pulverform innerhalb der groben Poren einer inerten Matrix aufgebracht ist.

2. Verfahren zur Herstellung von Adsorbentien mit katalytischer Wirkung nach Anspruch 1, dadurch gekennzeichnet, daß das feinporige Adsorptionsmittel, welches mit einem Katalysator in feiner Pulverform gemischt ist, aus Kieselgelen, Kiesel-Xerogele, Kieselgur und jeder anderen Verbindung auf Siliciumbasis und /oder jeder Erscheinungsform des Kohlenstoffes besteht.

3. Verfahren zur Herstellung von Adsorbentien mit katalytischer Wirkung nach Anspruch 1 und 2 dadurch gekennzeichnet, daß der Katalysator in feiner Pulverform aus einem geeigneten Metall und /oder deren Verbindung besteht

4. Verfahren zur Herstellung von Adsorbentien mit katalytischer Wirkung nach Anspruch 1, 2 und 3 dadurch gekennzeichnet, daß die inerte Matrix mit groben Poren aus gebranntem Ton, Gips, Zement oder porösen Kunstoffen besteht.
